# EUROPÄISCHE PATENTANMELDUNG

(11) **EP 3 971 774 A1**
(43) Veröffentlichungstag der Anmeldung: **23.03.2022**
(21) Anmeldenummer: 21189011.6
(22) Anmeldetag: 02.08.2021
(51) Int. Cl.: G06K 9/62, G06V 20/56

(54) **VORRICHTUNG UND VERFAHREN ZUR BEURTEILUNG DER ZUSAMMENSETZUNG EINES ERNTEGUTSTROMS**

(30) Priorität: 16.09.2020 DE 102020124201; 28.06.2021 DE 102021116566
(71) Anmelder: CLAAS Selbstfahrende Erntemaschinen GmbH, 33428 Harsewinkel (DE)
(72) Erfinder: Fischer, Frédéric, 59759 Arnsberg (DE); Witte, Johann, 58730 Fröndenberg (DE); Kettelhoit, Boris, 33335 Gütersloh (DE); Töniges, Torben, 33602 Bielefeld (DE)
(74) Vertreter: CLAAS Gruppe

(57) **Zusammenfassung**

Eine Vorrichtung zur Ermittlung eines Anteils an Bruchkorn und/oder Nichtkornbestandteilen in einem Erntegutstrom umfasst eine Kamera (3) zum Erzeugen von Bildern des Erntegutstroms und eine Auswerteeinheit (4) zum Abschätzen des Anteils in einem von der Kamera (3) gelieferten Bild. Die Auswerteeinheit (4) umfasst einen Klassifikator erster Ordnung (21) zum Abschätzen eines ersten Parameters des Erntegutstroms sowie mehrere jeweils verschiedenen Werten des ersten Parameters zugeordnete Klassifikatoren zweiter Ordnung (22) zum Abschätzen des Anteils in einem Erntegutstrom, der den jeweils zugeordneten Parameterwert aufweist, und ist eingerichtet, mit Hilfe des Klassifikators erster Ordnung (21) anhand einer ersten Anzahl von Bildern der Kamera (3) zunächst einen Wert des ersten Parameters abzuschätzen, und dann den dem Wert des ersten Parameters zugeordneten Klassifikator zweiter Ordnung (22) auszuwählen, um den Anteil mit Hilfe des ausgewählten Klassifikators zweiter Ordnung (22) abzuschätzen.

## Beschreibung

Die vorliegende Erfindung betrifft eine Vorrichtung und ein Verfahren zum computertechnischen Beurteilen eines Anteils an Bruchkorn und/oder Nichtkornbestandteilen in einem Erntegutstrom, eine Erntemaschine, in der eine solche Vorrichtung verwendet wird, sowie ein Computerprogrammprodukt, das einen Computer befähigt, das Verfahren auszuführen.

Fortschritte in der Computertechnik, insbesondere auf dem Gebiet der künstlichen Intelligenz, machen die Automatisierung und Optimierung von Steuerungsprozessen praktikabel, die früher vom Menschen basierend auf Erfahrung und Intuition vorgenommen wurden. Gleichzeitig erfordern solche Steuerungsprozesse einen hohen Aufwand, sowohl bei der Entwicklung als auch beim späteren praktischen Einsatz, insbesondere dann, wenn mehrere nicht ohne weiteres objektivierbare Parameter zu berücksichtigen sind.

So offenbart z.B. EP 2 826 356 B1 einen Mähdrescher mit einer auf einen Erntegutstrom ausgerichteten Kamera, deren Bilder computertechnisch ausgewertet werden, um Bruchkorn und Beimengungen zu erkennen und zu quantifizieren. Die hierfür erforderliche Rechenleistung ist erheblich, und dementsprechend hoch sind die Kosten des zur Auswertung der Bilder benötigten Computersystems.

EP 3 299 995 A1 nutzt Bildverarbeitung durch Computer, um Anomalien in der Umgebung einer landwirtschaftlichen Arbeitsmaschine zu erkennen und den Betrieb der Maschine, z.B. durch automatisches Umfahren eines erfassten Hindernisses, selektives Bearbeiten oder Nichtbearbeiten von Unkrautbeständen etc. zu effektivieren. Auch hier macht die Diversität der möglichen Anomalien, die erkannt und berücksichtigt werden müssen, einen hohen Entwicklungs- und Rechenaufwand notwendig.

Selbstlernende Algorithmen wie etwa neuronale Netze, Deep Learning oder Support Vector Machines versprechen zwar eine Verringerung des Programmieraufwandes bei der Entwicklung, benötigen aber zum Verarbeiten von durch mehrere Parameter beeinflussten Prozessdaten ebenfalls hohe Rechenleistungen, und auch die Menge an Beispieldaten, die zum Trainieren der Algorithmen benötigt wird, sowie die benötigte Lernzeit nehmen mit zunehmender Komplexität des Problems stark zu.

Eine Aufgabe der vorliegenden Erfindung ist, eine Vorrichtung und ein Verfahren zur Ermittlung eines Anteils an Bruchkorn und/oder Nichtkornbestandteilen in einem Erntegutstrom zu schaffen, die kostengünstig realisierbar sind und die mit geringem Rechenaufwand ein robustes Ergebnis liefern.

Die Aufgabe wird gelöst, indem bei einer Vorrichtung zur Ermittlung eines Anteils an Bruchkorn und/oder Nichtkornbestandteilen in einem Erntegutstrom mit einer Kamera zum Erzeugen von Bildern des Erntegutstroms und einer Auswerteeinheit zum Abschätzen des Anteils in einem von der Kamera gelieferten Bild die Auswerteeinheit einen Klassifikator erster Ordnung zum Abschätzen eines ersten Parameters des Erntegutstroms sowie mehrere jeweils verschiedenen Werten des ersten Parameters zugeordnete Klassifikatoren zweiter Ordnung zum Abschätzen des Anteils in einem Erntegutstrom, der den jeweils zugeordneten Parameterwert aufweist, umfasst und eingerichtet ist, mit Hilfe des Klassifikators erster Ordnung anhand einer ersten Anzahl von Bildern der Kamera zunächst einen Wert des ersten Parameters abzuschätzen, und dann den dem Wert des ersten Parameters zugeordneten Klassifikator zweiter Ordnung auszuwählen, um den Anteil mit Hilfe des ausgewählten Klassifikators zweiter Ordnung abzuschätzen.

Unter einem Klassifikator kann hier jede Art von Computersystem oder von auf einem Computersystem ausführbarem Prozess verstanden werden, das/der in der Lage ist, einen Input-Datensatz sinnvoll in eine von mehreren Kategorien einzuordnen, sei es anhand von durch einen Programmierer bei der Entwicklung des Klassifikators vorgegebener Regeln oder als Ergebnis eines Lernprozesses anhand von Beispieldatensätzen, für die die zugeordnete Kategorie jeweils vorab bekannt ist und zur Überprüfung und Korrektur der Zuordnungsergebnisse des Klassifikators genutzt werden kann. Insbesondere kann ein Klassifikator als neuronales Netz implementiert sein.

Wen zum Lösen eines gegebenen Klassifikationsproblems ein nicht lernfähiges Programm entwickelt wird, muss das zum Lösen des Problems nötige Wissen vom Programmierer in den Programmtext eingebracht werden. Es liegt auf der Hand, dass der damit verbundene Aufwand umso größer ist, je größer die Zahl der möglichen Klassifikationsergebnisse ist. Im Gegensatz dazu benötigt ein selbstlernendes System wie etwa ein neuronales Netz zwar kein Vorab-Wissen über das zu lösende Problem, sondern lernt effektiv durch Versuch und Irrtum anhand der Beispieldatensätze, doch auch ein solcher Lernvorgang ist umso langwieriger und sein Erfolg umso ungewisser, je größer die Zahl der möglichen Ergebnisse der Klassifikation ist. Die Erfindung nutzt die Tatsache, dass bei vielen praktischen Klassifikationsaufgaben die große Zahl möglicher Ergebnisse sich durch Kombinationen von Werten unterschiedlicher Parameter ergibt. Wenn etwa ein erster Parameter n und ein zweiter m verschiedene Werte annehmen kann, sind bis zu n*m verschiedene Kombinationen möglich. Wenn man hingegen die Aufgabe in aufeinanderfolgende Schritte zerlegt, dann genügt es, wenn ein Klassifikator erster Ordnung in der Lage ist, zwischen n verschiedenen Fällen zu unterscheiden, und ein mit Hilfe des Klassifikators erster Ordnung ausgewählter Klassifikator zweiter Ordnung zwischen m verschiedenen Fällen differenziert. Dies verringert nicht nur den Rechenaufwand beim Auswerten eines gegebenen Satzes von Prozessdaten, sondern auch den für die Bereitstellung des Programms erforderlichen Entwicklungsaufwand.

Die Klassifikatoren erster und zweiter Ordnung können zwar dieselben Bilder verwenden, müssen aber nicht. Tatsächlich kann es zweckmäßiger sein, bei einer Kamera, die fortlaufend neue Bilder liefert, zunächst eine erste Anzahl von Bildern zu verwenden, um den Wert des ersten Parameters abzuschätzen und den diesem Wert entsprechenden Klassifikator zweiter Ordnung auszuwählen, und diesen dann auf neue Bilder anzuwenden; um den Bedarf an Speicherplatz zu minimieren.

Wenn der erste Parameter ein langsam oder selten veränderlicher Parameter ist, dann kann, wenn sein Wert einmal abgeschätzt worden ist, der auf der Grundlage dieser Abschätzung ausgewählte Klassifikator zweiter Ordnung zur Auswertung einer großen Zahl von Bildern eingesetzt werden, ohne dass die Analyse durch den Klassifikator erster Ordnung wiederholt werden muss. Auch dies trägt erheblich zur Reduzierung des Rechenaufwands bei.

Eine Entscheidung darüber, wann erneut eine Auswertung durch den Klassifikator erster Ordnung erster Ordnung erfolgen soll, kann im einfachsten Fall von einem menschlichen Benutzer vorgenommen werden. Einer bevorzugten Weiterentwicklung zufolge wird sie vollautomatisch getroffen; zu diesem Zweck ist wenigstens einer der Klassifikatoren zweiter Ordnung eingerichtet, ein Konfidenzniveau für den abgeschätzten zweiten Parameter zu ermitteln, und die Auswerteeinheit veranlasst den Klassifikator erster Ordnung, wenigstens eine neue Anzahl von Bildern auszuwerten, um den ersten Parameter neu abzuschätzen, wenn das Konfidenzniveau einen Grenzwert unterschreitet. Das ist ein Maß für die Sicherheit, mit der der Bruch- oder Nichtkornanteil abgeschätzt wurde; ist dieses Maß niedrig, dann ist das ein Indiz dafür, dass der Klassifikator zweiter Ordnung mit den aktuellen Prozessdaten "nichts anfangen konnte", weil diese nicht denjenigen Wert des ersten Parameters aufweisen, für den der Klassifikator zweiter Ordnung ausgelegt ist.

Der erste Parameter bezeichnet vorzugsweise Art und/oder Sorte eines Ernteguts.

Der erfindungsgemäße Ansatz ist auf die Arbeitsweise des Klassifikators erster Ordnung selber übertragbar: dieser kann seinerseits einen Sub-Klassifikator erster Ordnung und mehrere Sub-Klassifikatoren zweiter Ordnung umfassen, wobei der Sub-Klassifikator erster Ordnung eingerichtet ist, anhand einer Anzahl von Bildern der Kamera einen Wert eines zweiten Parameters abzuschätzen, und der Klassifikator erster Ordnung eingerichtet ist, einen der Sub-Klassifikatoren zweiter Ordnung anhand des abgeschätzten Werts auszuwählen. So kann etwa der Sub-Klassifikator erster Ordnung ausgelegt sein, um zwischen verschiedenen Arten von Erntegut wie etwa Mais, Weizen, Soja etc. zu differenzieren, während der für die ausgewählte Art, z,B, Mais, spezifische Sub-Klassifikator zweiter Ordnung ausgelegt ist, um verschiedene Sorten von Mais zu identifizieren.

Vorzugsweise sind wenigstens einige der Klassifikatoren lernfähig, insbesondere die jeweils mehrfach vorhandenen Klassifikatoren der zweiten Ordnung. Das Training der Klassifikatoren der zweiten Ordnung kann erheblich vereinfacht werden, da jeder von ihnen nur mit Trainingsdatensätzen trainiert werden muss, deren Wert des ersten Parameters den dem betreffenden Klassifikator zweiter Ordnung zugeordneten Wert hat. D.h. jeder einzelne Klassifikator muss nur für eine bestimmte Sorte Erntegut eine brauchbare Beurteilung des Bruch- oder Nichtkornanteils liefern können, und wird folglich auch nur mit Bildern dieser Sorte trainiert. So ist ein erheblich schnelleres und sichereres Lernen möglich, als wenn mit Bildern verschiedener Sorten oder gar Arten trainiert werden muss.

Eine selbstfahrende Erntemaschine, insbesondere ein Mähdrescher, kann mit der oben beschriebenen Vorrichtung ausgestattet sein, z.B. um einem Fahrer in Echtzeit Aufschluss über Bruch- oder Nichtkornanteil im verarbeiteten Erntegutstrom zu geben und ihm die Optimierung von Parametern dieser Verarbeitung zu erleichtern, oder um eine vollautomatische Regelung der Verarbeitungparameter zu ermöglichen.

Die Aufgabe wird ferner gelöst durch ein Verfahren zum Ermitteln eines Anteils an Bruchkorn und/oder Nichtkornbestandteilen in einem Erntegutstrom mit den Schritten:
a) Bereitstellen einer Anzahl von Bildern eines Erntegutstroms,
b) Bereitstellen eines Klassifikators erster Ordnung, der eingerichtet ist, um einen ersten Parameter eines Erntegutstroms anhand eines Bildes des Erntegutstroms abzuschätzen, und einer Mehrzahl von Klassifikatoren zweiter Ordnung, die jeweils einem gegebenen Wert des ersten Parameters zugeordnet und eingerichtet sind, um unter der Annahme, dass der erste Parameter den zugeordneten Wert hat, den Anteil abzuschätzen;
c) Anwenden des Klassifikators erster Ordnung, um einen Wert eines ersten Parameters abzuschätzen;
d) anhand des abgeschätzten Werts, Auswählen eines Klassifikators zweiter Ordnung aus einer Mehrzahl von Klassifikatoren zweiter Ordnung; und
e) Anwenden des ausgewählten Klassifikators zweiter Ordnung, um einen Schätzwert des Anteils zu erhalten.

Die Bilder werden vorzugsweise nacheinander von einer Kamera bereitgestellt.

Zum das Bereitstellen der Klassifikatoren zweiter Ordnung gehört vorzugsweise das Trainieren jedes Klassifikators zweiter Ordnung anhand von Bildern eines Erntegutstroms, dessen erster Parameter jeweils den dem Klassifikator zweiter Ordnung zugeordneten Wert aufweist.

Die diversen Klassifikatoren zweiter Ordnung können jeweils ausgehend von einem gleichen ursprünglichen Klassifikator, z.B. einem generischen neuronalen Netz, bereitgestellt werden, indem jeweils ein Exemplar des ursprünglichen Klassifikators mit Bildern eines Erntegutstroms trainiert wird, dessen erster Parameter jeweils den dem Klassifikator zweiter Ordnung zugeordneten Wert aufweist, vorzugsweise also mit Bildern derjenigen Art oder Sorte eines Ernteguts, für die der Klassifikator zweiter Ordnung später eingesetzt werden soll.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen erfindungsgemäßen Mähdrescher;
- Fig. 2: verschiedene Maissorten; und
- Fig. 3: ein Blockdiagramm eines Datenverarbeitungssystems.

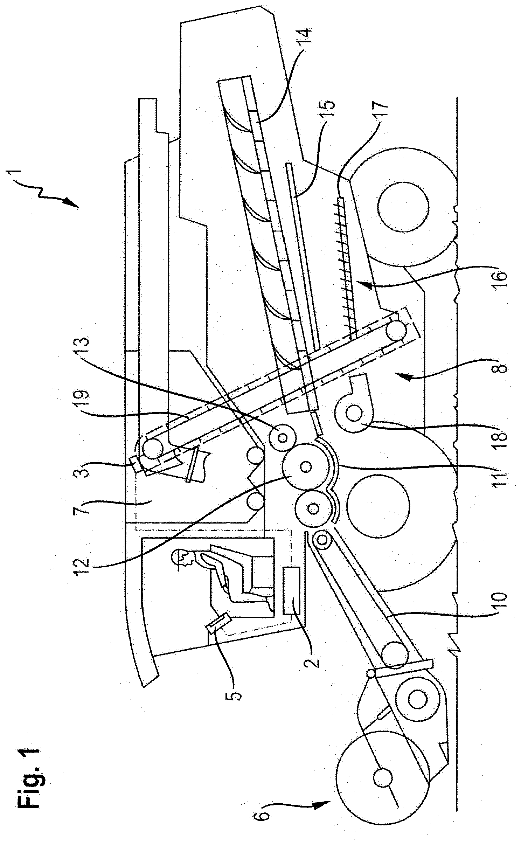

Fig. 1 zeigt einen Mähdrescher 1 in einer schematischen, teilweise geschnittenen Seitenansicht. Der Mähdrescher 1 trägt einen austauschbaren Erntevorsatz 6 zum Schneiden und Aufnehmen des Ernteguts vom Feld. Ein Schrägförderer 10 führt das geschnittene Erntegut von einem Dreschkorb 11 ummantelten Dreschorganen 12 zu. Von dort gelangt der Erntegutstrom über eine Umlenktrommel 13 in die hier als Trennrotor ausgebildete Trenneinrichtung 14, aus der frei bewegliche Körner des Erntegutstroms nach unten abgeschieden werden. Der Strom der Körner gelangt über einen Rücklaufboden 15 zu einer Reinigungsvorrichtung 16, die wie hier dargestellt, aus mehreren Siebebenen 17 und einem Gebläse 18 besteht. Nachdem der Strom der Körner hier von unerwünschten Anteilen wie Spelzen und Ährenbruchstücken befreit worden ist, gelangt er über einen Kornelevator 19 schließlich zu einem Korntank 7.

Diverse Parameter der Dreschorgane 12, der Trenneinrichtung 14 und der Reinigungsvorrichtung 16 wie etwa Geschwindigkeiten von Trommeln, Sieben und Gebläse, Spaltbreiten, etc. sind in an sich bekannter Weise durch ein Datenverarbeitungssystem 2 einstellbar, um den Dreschvorgang im Hinblick auf Durchsatz, Kornverlust oder Bruchkornanteil zu optimieren. Um den Bruchkornanteil abzuschätzen, ist eine Kamera 3 auf den Strom der Körner, hier z.B. am Kopfende des Elevators 19, ausgerichtet. Die Kamera 3 liefert in regelmäßiger Folge Bilder an eine Auswerteeinheit 4 des Datenverarbeitungssystems 2.

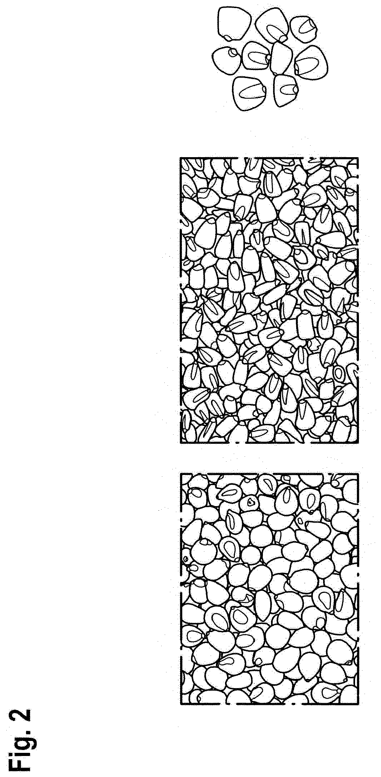

Der Inhalt dieser Bilder ist je nach Art des Ernteguts stark unterschiedlich; selbst bei Erntegut einer gleichen Art können sortenabhängig Unterschiede auftreten, die eine Abschätzung des Bruchkornanteils erschweren, wie die Bilder von verschiedenen Maissorten in Fig. 2 zeigen. Während bei einer ersten Sorte im linken Bild die Körner eher rundlich sind, hat eine zweite Sorte im mittleren Bild eher schlanke, kantigere Körner. Die Körner einer dritten Sorte im rechten Bild sind extrem breit. Ein anhand von Körnern der ersten oder der dritten Sorte kalibrierter Klassifikator würde daher dazu neigen, den Bruchanteil in Bildern der zweiten Sorte zu überschätzen, während ein anhand der zweiten Sorte kalibrierter Klassifikator den Bruchanteil für die erste und dritte Sorte unterschätzen würde.

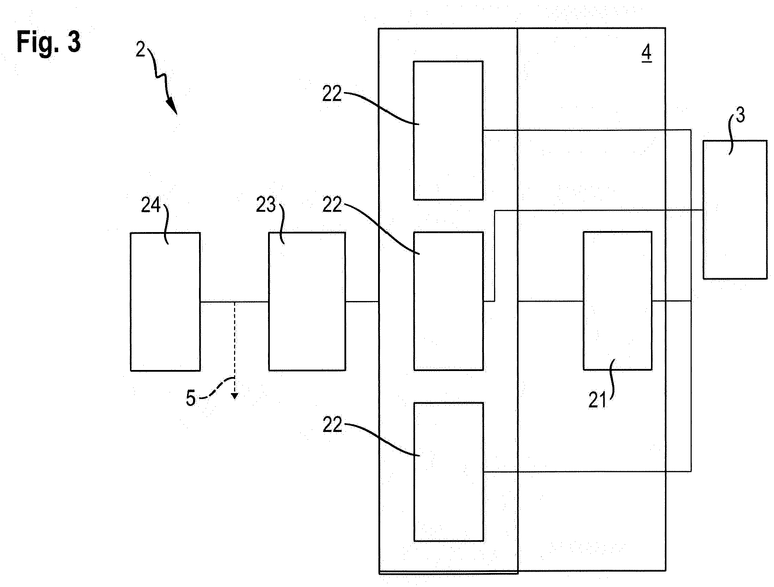

Um dieses Problem mit geringem Aufwand zu beheben, hat das Datenverarbeitungssystem 2 den in Fig. 3 gezeigten Aufbau: Die Auswerteeinheit 4 umfasst einen Klassifikator 21, hier auch als Klassifikator erster Ordnung bezeichnet, der mit der Kamera 3 verbunden ist, um von ihr Bilder des Körnerstroms zu empfangen und anhand dieser Bilder Art und Sorte des Ernteguts zu bestimmen. Zu jeder Sorte, die der Klassifikator 21 zu identifizieren in der Lage ist, existiert ein sortenspezifischer Klassifikator oder Klassifikator zweiter Ordnung 22, der eingerichtet ist, in Bildern von Körnern dieser Sorte den Bruchkornanteil abzuschätzen und den Schätzwert sowie ein für die Zuverlässigkeit des Schätzwerts repräsentatives Konfidenzniveau auszugeben. Von den Klassifikatoren zweiter Ordnung 22 ist während des Betriebs des Datenverarbeitungssystems 2 immer nur jeweils einer aktiv, um die von der Kamera 3 gelieferten Bilder zu verarbeiten; die anderen sind inaktiv, um keine Rechenleistung des Datenverarbeitungssystems 2 zu beanspruchen.

Der hier verwendete Begriff der Sorte ist mit dem von den Saatgutzüchtern verwendeten Begriff weitgehend deckungsgleich, muss es aber nicht in allen Details sein. So kann es z.B. Züchtersorten geben, die anhand des Aussehens ihrer Körner nicht auseinanderzuhalten sind, und zwischen denen der Klassifikator 21 folglich nicht unterscheiden kann. Andererseits kann es, wenn eine gleiche Züchtersorte je nach vorgesehener Verwendung in unterschiedlichen Reifestadien geerntet werden kann, notwendig sein, für die Reifestadien jeweils spezifische Klassifikatoren 22 vorzusehen.

Es kann eine Benutzerschnittstelle 5 vorgesehen sein, die dem Fahrer des Mähdreschers die Möglichkeit bietet, einen bestimmten Klassifikator zweiter Ordnung 22 anzuwählen. So kann der Fahrer, wenn er die auf einem Feld zu erntende Sorte weiß, diese dem Datenverarbeitungssystem 2 vorgeben, damit dieses bereits vor Beginn der Ernte die diversen Betriebsparameter des Dreschwerks für die betreffende Sorte passend einstellen kann und eine korrekte Auswertung der Bilder von Beginn der Ernte an sichergestellt ist. Alternativ oder ergänzend kann zu demselben Zweck eine Netzwerkschnittstelle vorgesehen sein, um von einem externen Rechner - ggfzusammen mit für autonomes Navigieren des Mähdreschers 1 auf dem Feld benötigten Daten - Angaben über Art und Sorte des Ernteguts zu empfangen.

Die Klassifikatoren 21, 22 sind jeweils als lernfähige Kl-Systeme, z.B. als neuronale Netze, implementiert. Der Klassifikator 21 ist vom Hersteller anhand von Bildern unterschiedlicher Arten und Sorten von Erntegut darauf trainiert, Art und Sorte des Ernteguts zu identifizieren. Die Klassifikatoren 22 sind jeweils anhand von Bildern der für sie spezifischen Sorte darauf trainiert, den Bruchkornanteil abzuschätzen.

Eine Prüfinstanz 23 entscheidet durch Vergleich der vom aktiven Klassifikator 22 ausgegebenen Konfidenzniveaus mit einem Schwellwert, ob dieser für das gegenwärtige Erntegut geeignet ist, oder ob möglicherweise die aktuell geerntete Sorte eine andere ist als die, für die der aktive Klassifikator 22 ausgelegt ist. Zweckmäßigerweise basiert die Entscheidung auf einem Mitteilwert von Konfidenzniveaus einer Mehrzahl von jeweils jüngsten Bildern.

Wenn die Prüfinstanz 23 eine Unterschreitung des Grenzwerts feststellt, so aktiviert sie den Klassifikator erster Ordnung 21. Wenn die Ressourcen des Datenverarbeitungssystems 2 nicht ausreichen, um die zwei Klassifikatoren 21, 22 gleichzeitig zu betreiben, kann bei Aktivierung des Klassifikators 21 der Klassifikator 22 deaktiviert werden; es stehen dann zwar eine Zeitlang keine aktuellen Daten zu Bruchkornanteil zur Verfügung, doch ist dies nicht weiter störend, solange deren Konfidenzniveau niedrig ist und es dementsprechend ungewiss ist, ob eine anhand des ermittelten Bruchkornanteils vorgenommene Verstellung von Dreschwerkparametern tatsächlich zu einer Verbesserung des Dreschergebnisses führen würde.

Der Klassifikator erster Ordnung 21 verwendet die aktuell von der Kamera 3 gelieferten Bilder, um Art und Sorte des Ernteguts zu ermitteln. Es können hierfür solange Bilder gesammelt werden, bis eine Entscheidung mit dem nötigen Konfidenzniveau getroffen werden kann. Sobald die Entscheidung getroffen ist, wird der der identifizierten Sorte zugeordnete Klassifikator 22 aktiviert und der Klassifikator 21 deaktiviert.

Das Datenverarbeitungssystem 2 umfasst ferner eine Steuereinheit 24, die die vom jeweils aktiven Klassifikator 22 ermittelten Bruchkornanteile empfängt und anhand von diesen und ggf. Messdaten weiterer Sensoren die Betriebsparameter des Dreschwerks zu optimieren. Alternativ oder ergänzend kann die Benutzerschnittstelle 5 vorgesehen sein, um dem Fahrer die ermittelten Bruchkornanteile anzuzeigen und ihm zu ermöglichen, Anpassungen an den Betriebsparametern des Dreschwerks vorzunehmen.

Der erfindungsgemäße Ansatz, ein komplexes Klassifikationsproblem in Teilprobleme zu zerlegen, die jeweils von einfachen, wenig rechenintensiven und mit kleinen Datenmengen effizient trainierbaren Klassifikatoren gehandhabt werden können, ist in verschiedener Hinsicht erweiterbar. Grundsätzlich kann jeder der Klassifikatoren 21, 22 einen inneren Aufbau haben, der dem in Fig. 3 gezeigten ähnlich ist. Beispielsweise kann auch das Problem der Sortenidentifikation vereinfacht werden, indem der Klassifikator 21 in einen Sub-Klassifikator erster Ordnung zum Identifizieren der Art des Ernteguts und Sub-Klassifikatoren zweiter Ordnung zum Identifizieren der Sorte zerlegt wird.

### Bezugszeichen

- 1: Mähdrescher
- 2: Datenverarbeitungssystem
- 3: Kamera
- 4: Auswerteeinheit
- 5: Benutzerschnittstelle
- 6: Erntevorsatz
- 7: Korntank
- 10: Schrägförderer
- 11: Dreschkorb
- 12: Dreschorgan
- 13: Umlenktrommel
- 14: Trenneinrichtung
- 15: Rücklaufboden
- 16: Reinigungsvorrichtung
- 17: Siebebene
- 18: Gebläse
- 19: Elevator
- 21: Klassifikator
- 22: Klassifikator
- 23: Prüfinstanz
- 24: Steuereinheit

## Patentansprüche

1. Vorrichtung zur Ermittlung eines Anteils an Bruchkorn und/oder Nichtkornbestandteilen in einem Erntegutstrom mit einer Kamera (3) zum Erzeugen von Bildern des Erntegutstroms und einer Auswerteeinheit (4) zum Abschätzen des Anteils in einem von der Kamera (3) gelieferten Bild, **dadurch gekennzeichnet, dass** die Auswerteeinheit (4) einen Klassifikator erster Ordnung (21) zum Abschätzen eines ersten Parameters des Erntegutstroms sowie mehrere jeweils verschiedenen Werten des ersten Parameters zugeordnete Klassifikatoren zweiter Ordnung (22) zum Abschätzen des Anteils in einem Erntegutstrom, der den jeweils zugeordneten Parameterwert aufweist, umfasst und eingerichtet ist, mit Hilfe des Klassifikators erster Ordnung (21) anhand einer ersten Anzahl von Bildern der Kamera (3) zunächst einen Wert des ersten Parameters abzuschätzen, und dann den dem Wert des ersten Parameters zugeordneten Klassifikator zweiter Ordnung (22) auszuwählen, um den Anteil mit Hilfe des ausgewählten Klassifikators zweiter Ordnung (22) abzuschätzen.

2. Vorrichtung nach Anspruch 1, **dadurch gekennzeichnet, dass** die Auswerteeinheit (4) eingerichtet ist, den Klassifikator zweiter Ordnung (22) zum Abschätzen des Anteils auf eine von der ersten Anzahl von Bildern verschiedene zweite Anzahl von Bildern anzuwenden.

3. Vorrichtung nach Anspruch 1 oder 2, **dadurch gekennzeichnet, dass** der erste Parameter diskretwertig ist und jedem möglichen Wert des ersten Parameters höchstens ein Klassifikator zweiter Ordnung zugeordnet ist.

4. Vorrichtung nach einem der vorhergehenden Ansprüche, **dadurch gekennzeichnet, dass** wenigstens ein Klassifikator zweiter Ordnung (22) eingerichtet ist, dem Ergebnis einer Abschätzung ein Konfidenzniveau zuzuordnen, und dass die Auswerteeinheit (4) eingerichtet ist, den Klassifikator erster Ordnung (21) aufzurufen, wenn das Konfidenzniveau einen Grenzwert unterschreitet.

5. Vorrichtung nach einem der vorhergehenden Ansprüche, **dadurch gekennzeichnet, dass** der erste Parameter Art und/oder Sorte eines Ernteguts bezeichnet.

6. Vorrichtung nach einem der vorhergehenden Ansprüche, **dadurch gekennzeichnet, dass** der Klassifikator erster Ordnung (21) seinerseits einen Sub-Klassifikator erster Ordnung und mehrere Sub-Klassifikatoren zweiter Ordnung umfasst, wobei der Sub-Klassifikator erster Ordnung eingerichtet ist, anhand einer Anzahl von Bildern der Kamera (3) einen Wert eines zweiten Parameters abzuschätzen, und der Klassifikator erster Ordnung (21) eingerichtet ist, einen der Sub-Klassifikatoren zweiter Ordnung anhand des abgeschätzten Werts auszuwählen.

7. Vorrichtung nach einem der vorhergehenden Ansprüche, **dadurch gekennzeichnet, dass** die Klassifikatoren (21, 22) anhand von Bildern von Erntegutströmen und bekannten Anteilen der abgebildeten Erntegutströme trainierbar sind.

8. Selbstfahrende Erntemaschine (1) mit einer Vorrichtung (2) nach einem der vorhergehenden Ansprüche.

9. Verfahren zum Ermitteln eines Anteils an Bruchkorn und/oder Nichtkornbestandteilen in einem Erntegutstrom mit den Schritten:
a) Bereitstellen einer Anzahl von Bildern eines Erntegutstroms,
b) Bereitstellen eines Klassifikators erster Ordnung (21), der eingerichtet ist, um einen ersten Parameter eines Erntegutstroms anhand eines Bildes des Erntegutstroms abzuschätzen, und einer Mehrzahl von Klassifikatoren zweiter Ordnung (22), die jeweils einem gegebenen Wert des ersten Parameters zugeordnet und eingerichtet sind, um unter der Annahme, dass der erste Parameter den zugeordneten Wert hat, den Anteil abzuschätzen;
c) Anwenden des Klassifikators erster Ordnung (21), um einen Wert eines ersten Parameters abzuschätzen;
d) anhand des abgeschätzten Werts, Auswählen eines Klassifikators zweiter Ordnung (22) aus einer Mehrzahl von Klassifikatoren zweiter Ordnung; und
e) Anwenden des ausgewählten Klassifikators zweiter Ordnung (22), um einen Schätzwert des Anteils zu erhalten.

10. Verfahren nach Anspruch 9, bei dem die Bilder nacheinander von einer Kamera (3) bereitgestellt werden

11. Verfahren nach Anspruch 10, bei dem der Wert des ersten Parameters anhand einer ersten Anzahl der Bilder abgeschätzt wird und der Schätzwert des Anteils anhand einer zweiten Anzahl der Bilder erhalten wird, die von der Kamera (3) nach der ersten Anzahl Bilder bereitgestellt wird.

12. Verfahren nach einem der Ansprüche 9 bis 11, bei dem das Bereitstellen der Klassifikatoren zweiter Ordnung (22) das Trainieren jedes Klassifikators zweiter Ordnung anhand von Bildern eines Erntegutstroms umfasst, dessen erster Parameter jeweils den dem Klassifikator zweiter Ordnung (22) zugeordneten Wert aufweist.

13. Verfahren nach einem der Ansprüche 9 bis 11, bei dem das Bereitstellen der Klassifikatoren zweiter Ordnung (22) das Bereitstellen eines ursprünglichen Klassifikators und das Erzeugen jedes Klassifikators zweiter Ordnung aus dem ursprünglichen Klassifikator durch Trainieren anhand von Bildern eines Erntegutstroms umfasst, dessen erster Parameter jeweils den dem Klassifikator zweiter Ordnung zugeordneten Wert aufweist.

14. Computerprogrammprodukt welches Instruktionen umfasst, die bei Ausführung auf einem Computer diesen befähigen, als Auswerteeinheit in einer Vorrichtung nach einem der Ansprüche a bis 7 zu arbeiten oder das Verfahren nach einem der Ansprüche 9 bis 13 auszuführen.
